Europäisches Patentamt

European Patent Office

Office européen des brevets

(11) Publication number: **0 342 766**
**A2**

# (12) EUROPEAN PATENT APPLICATION

(21) Application number: **89201291.5**

(22) Date of filing: **19.05.89**

(51) Int. Cl.⁴: **C08F 291/10** , //(C08F291/10, 212:06,220:20)

(30) Priority: **20.05.88 US 196572**

(43) Date of publication of application:
**23.11.89 Bulletin 89/47**

(84) Designated Contracting States:
**BE DE ES FR GB IT NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Farris, Robert Dale**
**22419 South Rebecca Burwell**
**Katy Texas 77449(US)**
Inventor: **Stewart, Steven Lee**
**8415 Forestside Lane**
**Houston Texas 77095(US)**
Inventor: **Corley, Larry Steven**
**6807 San Pablo**
**Houston Texas 77083(US)**

(74) Representative: **Aalbers, Onno et al**
**P.O. Box 302**
**NL-2501 CH The Hague(NL)**

(54) **Heat curable composition.**

(57) A curable composition, comprising:
(1) from 98 to 24 pbw of polyepoxide,
(2) from 1 to 75 pbw of an unsaturated aromatic monomer,
(3) from 1 to 75 pbw of a polyacrylate or polymethacrylate ester of a polyol,
(4) from 0.01 to 10 pbw of a tetrafluoroborate of Cu, Zn, Fe, Ni, Sn, Sb or Al per 100 pbw of the polyepoxide, and
(5) a curing amount of a free-radical curing agent.

EP 0 342 766 A2

## HEAT CURABLE COMPOSITION

The present invention is directed to a heat-curable composition comprising a polyepoxide, an unsaturated aromatic monomer, a polyacrylate or polymethacrylate ester of a polyol, a free-radical curing agent and a metal tetrafluoroborate.

Curable compositions comprising epoxy resins and styrene have generally been epoxy-polyester compositions wherein a portion of the polyester is replaced with styrene or other ethylenically unsaturated monomer. Polyether resin and styrene blends exhibit poor processability, short pot life, and high viscosity and cure with conventional curing agents to produce products which do not exhibit good physical properties, such as high heat deflection temperatures and retention of physical properties at elevated temperatures.

U.S.-A-4,284,753 discloses that epoxy/styrene blends can be cured with a special curing agent/curing accelerator blend, e.g., an acid anhydride in combination with an onium salt, to yield products which exhibit improved physical properties, especially increased heat deflection temperatures and retention of physical properties at elevated temperatures.

Epoxy resins cured with anhydrides, however, contain hydrolyzable ester linkages in the crosslinked network. They tend to degrade severely upon aging under hot wet conditions. Also, the anhydrides which provide higher heat resistance are solids with poor solubility in the resin at room temperature; uncured resin mixtures with these anhydrides are slurries rather than solutions. For this reason they are poorly suited to impregnating mats of fibers.

A new heat curable composition has been found which overcomes these disadvantages.

The present invention provides a composition, comprising:

(1) from 98 to 24 pbw of polyepoxide,

(2) from 1 to 75 pbw of an unsaturated aromatic monomer,

(3) from 1 to 75 pbw of a polyacrylate or polymethacrylate ester of a polyol,

(4) from 0.01 to 10 pbw of a tetrafluoroborate of Cu, Zn, Fe, Ni, Sn, Sb or Al per 100 pbw of the polyepoxide, and

(5) a curing amount of a free-radical curing agent.

The improved heat-curable epoxy resin-styrene compositions, which when cured, yield products exhibiting improved physical properties, such as increased heat deflection temperature, increased flexural strength, and increased flexibility and are suitable for use in sheet molding compositions (SMC), in structural applications, such as transfer molding (RTM) applications. In addition to the above, these compositions also give reduced viscosity combined with excellent heat resistance, factors which make it a leading candidate for a number of pultrusion, filament winding, and resin transfer molding applications.

The polyepoxides used to prepare the present compositions comprise those compounds containing at least one vicinal epoxy group. These polyepoxides may be saturated or unsaturated, aliphatic, cycloaliphatic, aromatic or heterocyclic and may be substituted if desired with non-interfering substituents such as halogen atoms, hydroxyl groups, ether groups, and the like.

Preferred polyepoxides are the glycidyl polyethers of polyhydric phenols and polyhydric alcohols, especially the glycidyl polyethers of 2,2-bis(4-hydroxyphenyl)propane having an average molecular weight between 300 and 3,000 and an epoxide equivalent weight between 140 and 2,000 and more preferably an average molecular weight of from 300 to 1000 and an epoxide equivalent weight of from 140 to 650.

Other suitable epoxy compounds include those compounds derived from polyhydric phenols and having at least one vicinal epoxy group wherein the carbon-to-carbon bonds within the six-membered ring are saturated.

Other examples of suitable polyepoxides include the glycidyl ethers of novolac resins, i.e., phenol-aldehyde condensates.

Examples of unsaturated aromatic monomers include the vinyl aromatic monomers of up to about 14 carbon atoms including one or two aryl or heteroaryl rings, such as styrene; alpha-methylstyrene; alkyl-, halo- and nitro-substituted styrenes such as vinyl toluene, chlorostyrene, bromostyrene, nitrostyrene; divinylbenzene, tertiary-butylstyrene; 2-vinyl pyridine; and vinyl naphthalene. Mixtures of unsaturated aromatic monomers may be employed. A very preferred mixture comprises styrene and divinylbenzene. The preferred vinyl aromatic monomer is styrene.

Preferred polyacrylate and polymethacrylate esters of polyols are those containing more than one terminal acrylate or methacrylate group. These esters are the acrylic and methacrylic acid esters of aliphatic polyhydric alcohols such as, for example, the di- and polyacrylates and the di- and polymethacrylates of alkylene glycols, polyoxyalkylene glycols, alicyclic glycols and higher polyols, such as ethylene glycol, triethylene glycol, tetraethylene glycol, tetramethylene glycol, hexanediol, trimethylolethane, trimethylolpropane, pentaerythritol, dipentaerythritol, tripentaerythritol and the like, or mixtures of these with each other or with their partially esterified analogs. Trimethylolpropane esters are preferred.

Usable blends of the various components will vary depending upon the nature of the polyepoxide used and the desired viscosity. These ranges of component amounts, in pbw, are shown below in percent by weight total composition:

|  | Suitable Range | Preferred Range | Most Preferred Range |
|---|---|---|---|
| Polyepoxide | 98 to 24 | 98 to 50 | 95 to 65 |
| Aromatic Monomer | 1 to 75 | 1 to 75 | 2.5 to 17.5 |
| Acrylic/Methacrylic Monomer | 1 to 75 | 1 to 25 | 2.5 to 17.5 |

Examples of such semi-radical curing agents include the peroxides, such as benzoyl peroxide, tertiary butyl hydroperoxide, ditertiary butyl peroxide, hydrogen peroxide, potassium persulfate, methyl cyclohexyl peroxide, cumene hydroperoxide, acetyl benzoyl peroxide, Tetralin hydroperoxide, phenylcyclohexane hydroperoxide, tertiary butyl peracetate, dicumyl peroxide, tertiary butyl perbenzoate, ditertiary amyl perphthalate, ditertiary butyl peradipate, tertiary amyl percarbonate, and the like, and mixtures thereof; azo compounds such as 2,2'-azobisisobutyronitrile, dimethyl 2,2'-azobisisobutyrate, 2,2'-azobis(2,4-dimethylvaleronitrile), 2,2'-azobisisobutyramide, and the like. Particularly preferred agents include the dialkyl peroxides, tertiary alkyl hydroperoxides, alkyl esters of peroxycarboxylic acids and particularly those of the above noted groups which contain no more than 18 carbon atoms per molecule and which have a half-life of at least one hour at 125°C. An especially useful peroxide is 2,5-dimethyl-2,5-bis(tertiary-butylperoxy) hexane (Lupersol 101) (Lupersol is a registered trade mark).

An essential component of the present invention is the metal tetrafluoroborate. The use of the metal tetrafluoroborate enables rapid cure at high temperature with often relatively long pot life at room temperature without water-sensitive anhydrides, or aromatic amines which are frequently toxic.

The group of metal tetrafluoroborates includes those of aluminium, iron, nickel, copper, zinc, tin, and antimony. Copper tetrafluoroborate is most preferred.

The preferred amount of metal tetrafluoroborate employed in the compositions of the invention is from 0.1 to 7 parts by weight per 100 parts by weight polyepoxide. A small amount (less than 10% by weight of metal tetrafluoroborate solution) of an amine or an inorganic base may be added to the metal tetrafluoroborate solution to neutralize excess acid and increase the pot life. However, the amount of amine, if any, added will be far less than that required to cure the epoxy resin by stoichiometric amine-epoxy reactions of the type used in U.S.-A-4,389,515 and -A-4,397,998.

The metal tetrafluoroborate can be added neat or, preferably, is used as a solution in water, organic solvents or mixtures thereof. Suitable organic solvents include alcohols, glycols, glycol ethers, ketones, sulfoxides, amides and the like. Preferred are polyalkylene glycols or polyalkylene ether glycols having an average molecular weight of from 200 to 1,500, and especially a polyethylene glycol or polypropylene glycol having an average molecular weight of between 300 and 1,000.

The amount of polyalkylene glycol or polyalkylene ether glycol or other solvent will depend somewhat on the particular epoxy resin and/or metal tetrafluoroborate used. The amount will generally be from 10 to 500 weight % based on the weight of the metal tetrafluoroborate or expressed alternatively, as from 0.001 to 9 weight % based on the weight of the epoxy resin.

The solution of metal tetrafluoroborate can also contain a surfactant. The surfactant is suitably a nonionic surfactant such as those of the formula

$R-O-(CH_2CH_2O)_nH$

in which n is 2 or 20 and R is $C_6$ to $C_{30}$ alkyl, cycloakyl, alkaryl or aralkyl. The surfactant can be present in an amount within the range of from 0.01 to 10 weight % based on the weight of the epoxy resin, preferably from 0.5 to 5 weight % based on the epoxy resin.

The present compositions may be utilized in many applications such as for coatings and impregnating compositions in the preparation of adhesives for metals, wood, cement and the like, and in the preparation of reinforced composite products, such as laminated products, filament windings, sheet molding compounds (SMC), electrical laminates, molding powders, fluidized bed powders, potting compounds, etc. A very suitable application is in the preparation of reinforced products and laminates wherein the compositions are applied to fibrous products such as glass fibers or cloth and the material formed into the desired object and cured.

The following examples are given to illustrate the preparation of the instant heat-curable thermosetting compositions. It is understood that the examples are embodiments only and are given for the purpose of illustration and the invention is not to be regarded as limited to any specific components and/or specific conditions recited therein. Unless otherwise indicated, parts and percentages in the examples, are parts and percentages by weight.

EPON (EPON is registered trade mark) Resin 826 is a liquid glycidyl polyether of 2,2-bis (4-hydroxyphenyl)propane having an epoxide equivalent weight of 175-190 and an average molecular weight of 360.

EPON Resin 828 is a liquid glycidyl polyether of 2,2-bis (4-hydroxyphenyl)propane having an epoxide equivalent weight of 180-195 and an average molecular weight of 380.

EPON Resin DPS-164 is a glycidated o-cresol novolac having an epoxide equivalent weight of 200-240.

The compositions were tested according to the following test procedures:

Heat distortion temperature, °C, ASTM D-648
Tg, °C, dynamic mechanical (Rheometrics)
R.T. Tensile Strength, MPa, ASTM D-638
R.T. Tensile Modulus, MPa, ASTM D-638
R.T. Tensile Elongation, %, ASTM D-638
149°C Tensile Strength, MPa, ASTM D-638
149°C Tensile Modulus, MPa, ASTM D-638
149°C Tensile Elongation, %, ASTM D-638

EXAMPLE 1

Copper Tetrafluoroborate Cure of Bisphenol A - Derived Epoxy Resins Diluted with Styrene and Trimethylolpropane Trimethacrylate (TMPTMA)

A curing agent mixture was prepared by mixing 40 parts of hydrated crystalline $Cu(BF_4)_2$ with 60 parts of liquid polyethylene glycol 400 (PEG-400) and stirring until the copper tetrafluoroborate hydrate had dissolved in the polyethylene glycol to form a liquid solution. This solution was used in the remainder of this example and also in the following example.

EPON Resin 826, monomers, catalysts/initiators and the above curing agent mixture in the proportions listed in Table 1 were combined at room temperature in polyethylene beakers and mixed thoroughly with Jiffy mixers. A portion of each mixture was poured into a group of aluminium molds containing a linear cavity (12.7 mm square) to form bar castings. Another portion of one of the mixtures was poured into a mold made of two glass plates held 3.2 mm apart with a polytetrafluoroethylene spacer to make a sheet casting. The sheet and bar casting molds were placed in an oven and held for one hour at 70°C and one hour at 150°C. The sheet and bar castings were then removed from the molds and tested for mechanical properties. Mechanical properties are given in Table 1.

A third portion of one of the mixtures was placed in a glass jar and held at room temperature. Viscosity was measured periodically with a Brookfield viscometer. A "pot life" was determined as the time required for the initial viscosity to double.

From Table 1 one can see that the heat resistance of the cured resin depends quite strongly on the amount of copper tetrafluoroborate curing agent used and the amount and type of monomer diluent used. Dilution with styrene (or styrene plus TMPTMA) reduces HDT in comparison with the undiluted system. When a higher concentration of curing agent is used, however, the HDT of the system diluted with styrene and TMPTMA exceeds that of the undiluted system at the lower curing agent concentration.

EP 0 342 766 A2

TABLE 1

| EFFECT OF TRIMETHYLOLPROPANE TRIMETHACRYLATE ON HDT OF STYRENE-DILUTED $Cu(BF_4)_2$-CURED EPOXIES | | | | | |
|---|---|---|---|---|---|
| Experiment | | 1 | 2 | 3 | 4 |
| EPON Resin 826 | | 100 | - | 100 | 100 |
| EPON Resin 828 | | - | 100 | | |
| Styrene | | - | 10 | 10 | 10 |
| Trimethylolpropane Trimethacrylate (TMPTMA) | | - | - | 10 | 10 |
| BPA | | - | 3 | | |
| Lupersol 101 | | - | 0.4 | 0.4 | 0.4 |
| $Cu(BF_4)_2$ x $H_2O$ (40% in Polyethylene Glycol 400) | | 2 | 1.76 | 2 | 4 |
| HDT, 264 psi, °C | | 113.5 | 101 | 76.5 | 125 |
| Tg, dynamic mechanical, °C | | | | | 164 |
| R.T. Tensile | Strength, psi | | | | 5,270 |
| | Modulus, psi | | | | 369M |
| | Elongation, % | | | | 1.64 |
| R.T. Flex | Strength, psi | | | | 13,000 |
| | Modulus, psi | | | | 435M |
| Pot Life | | | | | 3 hr. 20 min. |
| Cure Cycle: 1 hr. 70°C, 1 hr. 150°C Components used in parts by weight. | | | | | |

EXAMPLE 2

Copper Tetrafluoroborate Cure of Monomer-Diluted Mixtures of Bisphenol A - Based Epoxy Resin with Epoxy o-Cresol Novolac

Mixtures of EPON Resin 826, EPON Resin DPS-164, styrene, TMPTMA and Lupersol 101 were prepared in glass jars. The jars were placed on a tumbler and rolled until the solid EPON Resin DPS-164 had dissolved and the mixtures had become homogeneous liquids. A portion of the curing agent mixture from Example 1 was then added to each jar and the resultant mixtures were mixed with Jiffy mixers. The room temperature viscosity of some of these mixtures was measured with a Brookfield viscometer. Thin film gel time in seconds was also determined for some of the mixtures on a gel plate set at 93°C. A portion of each mixture was poured into aluminium molds to form bar castings as in Example 1. The molds were placed in an oven and cured. Heat distortion temperatures of the resultant bars are given in Table 2.

5

TABLE 2

| | HEAT RESISTANCE OF STYRENE-TMPTMA DILUTED FORMULATIONS CONTAINING EPOXY NOVOLAC AND CURED WITH SOLUTION OF COPPER(II) TETRAFLUOROBORATE IN POLYETHYLENE GLYCOL 400 | | | | | | | | |
|---|---|---|---|---|---|---|---|---|---|
| Experiment | EPON Resin 826 parts* | EPON Resin DPS-164 parts | Styrene, parts | TMPTMA, parts | Lupersol 101, parts | Curing Agent Solution, parts | 25°C Brookfield Viscosity, mPa.s | 93°C Gel Time, sec. | HDT 264 psi, °C |
| 1 | 50 | 50 | 29.1 | 19.4 | 0.23 | 4 | | | 145 |
| 2 | 50 | 50 | 29.1 | 19.4 | 0.23 | 2 | | | 133 |
| 3 | 50 | 50 | 29.1 | 19.4 | 0.23 | 6 | | 109 | 177 |
| 4 | 50 | 50 | 18.3 | 73.3 | 0.26 | 4 | 495 | | >192 |
| 5 | 50 | 50 | 33.0 | | 0.40 | 4 | 440 | | 127 |
| 6 | 100 | | 10.6 | 35.4 | 0.22 | 4 | 538 | | 103 |
| 7 | | 100 | 47.6 | 31.8 | 0.23 | 4 | 560 | | 171 |
| 8 | 23.4 | 76.6 | 42.1 | 8.6 | 0.27 | 5.1 | | | 152 |
| 9 | 79 | 21 | 15.5 | 26.4 | 0.23 | 2.8 | 363 | 150 | 182.5 |
| 10 | 21 | 79 | 33.7 | 57.4 | 0.23 | 5.1 | 694 | 250 | 174,179 |
| 11 | 79 | 21 | 20.3 | 4.1 | 0.28 | 2.8 | 260 | >900 | 140 |
| 12 | 79 | 21 | 20.0 | 40.7 | 0.28 | 5.1 | | | 96 |
| 13 | 21 | 79 | 33.7 | 57.4 | 0.23 | 2.8 | 560 | | 189 |
| 14 | 79 | 21 | 15.5 | 26.4 | 0.23 | 5.2 | | | 132 |
| 15 | 21 | 79 | 43.4 | 8.9 | 0.28 | 2.8 | 1795 | | 136.5 |
| 16 | 50 | 50 | 29.1 | 19.4 | 0.23 | 4 | | 85 | 147 |

*Parts by weight.

EP 0 342 766 A2

One can compare a number of different systems in Table 2 which differed only in ratio of TMPTMA to styrene (4 versus 5, 8 versus 10, 9 versus 11, 13 versus 15). In each of these cases, the blend with the higher ratio of parts by weight TMPTMA to styrene had a considerably higher HDT than the blend with the lower ratio of TMPTMA to styrene.

## EXAMPLE 3

Pot Life and Gelation Behavior of Styrene-Diluted Epoxy Resin Cured with Copper and Zinc Tetrafluoroborates with and without Amine and Surfactant Modification

The following resin mixture was prepared:

| Component | Parts* |
|---|---|
| EPON Resin 828 | 100 |
| Styrene | 10 |
| Lupersol 101 | 0.4 |
| Phenothiazine | 0.01 |

*"Parts" are by weight.

Two amine-modified metal tetrafluoroborate solutions were prepared as follows. The first mixture (Curing Agent Mixture C) was prepared by adding, dropwise, 0.51 g of ethylenediamine to 50.32 g of 40% aqueous zinc tetrafluoroborate solution (Harshaw) with continuous stirring turbidity. The second mixture (Curing Agent Mixture D) was prepared by adding, dropwise, ethylenediamine to 50 g of 45% aqueous copper(II) tetrafluoroborate solution (Alfa) with continuous stirring until a permanent turbidity developed in the solution. Both of these mixtures contained a small amount of a precipitate which was removed by centrifugation. The supernatant liquids were the materials used in the remainder of the example.

The above resin mixture, curing agents, and additives as indicated in Table 3 below were combined in polyethylene beakers until the mixtures were either homogeneous solutions or very fine emulsions or dispersions of droplets of the curing agent solution in the resin solution. The mixtures were deaerated by centrifugation. Thin film gel time for each mixture was determined on a gel plate at 120° C.

A portion of each mixture was placed in a glass Ubbelohde viscometer which was in turn placed in a 25° C water bath. Viscosity of the mixtures was determined periodically and a "pot life" was determined as the time required for the initial viscosity to double. Additional portions of the mixtures were poured into molds for sheet and bar castings as in Example 1. The molds were then placed into an oven and the castings were cured for one hour at 80° C, one hour at 120° C, and two hours at 150° C. Mechanical properties of the samples are given in Table 3.

One can see from Table 3 that the mixtures cured with zinc tetrafluoroborate have longer pot life and longer gel time than the mixtures cured with an equivalent quantity of copper(II) tetrafluoroborate. The mixtures cured with an amine-neutralized solution have longer pot life and longer gel time than the mixtures cured with a non-amine-modified solution of the same tetrafluoroborate. Addition of NEODOL 91-6 to the mixture appears to improve considerably the pot life of the mixture cured with unneutralized zinc tetrafluoroborate solution without lengthening the gel time. The same effect is not noted, however, for the mixtures cured with unneutralized copper(II) tetrafluoroborate or neutralized zinc or copper(II) tetrafluoroborate solutions.

TABLE 3

EFFECT OF AMINE AND SURFACTANT MODIFICATION ON PROPERTIES OF STYRENE-DILUTED
EPOXY RESINS CURED WITH AQUEOUS SOLUTIONS OF COPPER AND ZINC TETRAFLUOROBORATES

| Run # | Resin Mixture Parts | 40% aq. $Zn(BF_4)_2$ Parts | 45% aq. $Cu(BF_4)_2$, Parts | Curing Agent C, Parts | Curing Agent D, Parts | NEODOL 91-6, Parts | 120°C Gel Time, Sec. | Elapsed Time (min.) Ubbelohde Viscosity (mPa.s) |
|---|---|---|---|---|---|---|---|---|
| 75-1 | 100 | 2.42 | | | | | 19 | 125-2616, 185-3137, 285-4213, 385-5098, 450-5935 |
| 75-2 | 100 | | 2.42 | | | | 9 | |
| 75-3 | 100 | 2.42 | | | | 1.21 | 21 | 122-1155, 182-1319, 282-1470, 382-1706, 448-1844 |
| 75-4 | 100 | | 2.42 | | | 1.21 | 10 | |
| 89-1 | 100 | | | | 2.42 | | 17 | 110-751, 215-904, 345-1018, 455-1255 |
| 89-2 | 100 | | | | 2.42 | 1.21 | 15 | 107-707, 210-850, 342-970, 452-1000 |
| 103-1 (b) | 100 | | | | 2.42 | 1.21 | | |
| 95-1 | 100 | | | 2.42 | | | 50 | |
| 95-2 | 100 | | | 2.42 | | 1.21 | 30 | |

(a) Mixtures rose in viscosity too rapidly for pot life to be determined with Ubbelohde viscometer.
(b) Cured for one hour at 60°C, one hour at 80°C, one hour at 120°C, and two hours at 150°C.

"parts" are parts by weight

TABLE 3 (Cont'd)

EFFECT OF AMINE AND SURFACTANT MODIFICATION ON PROPERTIES OF STYRENE-DILUTED
EPOXY RESINS CURED WITH AQUEOUS SOLUTIONS OF COPPER AND ZINC TETRAFLUOROBORATES

| Run # | 25°C Pot Life, hr. | HDT 264 psi, °C | $T_g$ Rheometrics °C | R.T. Tensile Strength, MPa | R.T. Tensile Modulus, MPa | R.T. Tensile Elongation, % |
|---|---|---|---|---|---|---|
| 75-1 | 4.7 | 106,107 | 137 | 52 | 2730 | 2.59 |
| 75-2 | (a) | 97,98 | 117 | 60 | 3139 | 2.4 |
| 75-3 | 8.3 | 94,95 | 127 | | | |
| 75-4 | (a) | 87,87 | 110 | | | |
| 89-1 | 8.5 | | | | | |
| 89-2 | 8.5 | | | | | |
| 103-1 (b) | | 99,100 | 120 | 62 | 3076 | 2.85 |
| 95-1 | >20 | | 118 | 51 | 2920 | 2.27 |
| 95-2 | >20 | 94,98 | | | | |

(a) Mixtures rose in viscosity too rapidly for pot life to be determined with Ubbelohde viscometer.
(b) Cured for one hour at 60°C, one hour at 80°C, one hour at 120°C, and two hours at 150°C.

EXAMPLE 4

Use of Neutralized, Surfactant-Modified Aqueous Solutions of Zn(II), Fe(II) and Cu(II) Tetrafluoroborates As

9

Curing Agents for Monomer-Diluted Epoxy Resins: Gel Time and Pot Life Behavior

Three curing agent formulations (Curing Agents E, F and G) were prepared as follows. Two hundred grams of an aqueous metal tetrafluoroborate solution (40% zinc tetrafluoroborate for Curing Agent E, 41% ferrous tetrafluoroborate for Curing Agent F, and 45% cupric tetrafluoroborate for Curing Agent G) were titrated under stirring with ethylenediamine until a slight permanent turbidity occurred.

The resin mixture used in Example 3 (100 parts) was mixed with different quantities of the above curing agents in polyethylene beakers with a Jiffy mixer until an emulsion of droplets of the liquid curing agent in the resin mixture was obtained. The resin-curing agent mixtures were then deaerated by centrifugation. Gel time of the mixtures in thin films was determined on gel plates set at various temperatures.

A portion of each mixture was poured into a Ubbelohde viscometer which was then placed in a water bath held at 25°C. Viscosity was measured periodically and "pot life" was calculated as the time required for initial viscosity to double. Additional portions of the mixtures were placed into molds for sheet and bar castings as in Example 1. The molds were placed in an oven and held for two hours at 80°C, one hour at 120°C, and one hour at 150°C. Gel time, pot life and casting properties are listed in Table 4.

TABLE 4

USE OF DIFFERENT CONCENTRATIONS OF NEUTRALIZED, SURFACTANT-MODIFIED AQUEOUS
SOLUTIONS OF ZINC, IRON(II) AND COPPER(II) TETRAFLUOROBORATES AS CURING
AGENTS FOR STYRENE-DILUTED LIQUID EPOXY RESIN (a)

| Run -100- | Curing Agent (parts) | 60°C Gel Time, sec. | 84°C Gel Time, sec. | 90°C Gel Time, sec. | 100°C Gel Time, sec. | 120°C Gel Time, sec. | Elapsed Time (minutes) - Ubbelohde Viscosity (mPa.s) | 25°C Pot Life, hr. | Rheometrics $T_g$, °C |
|---|---|---|---|---|---|---|---|---|---|
| 1 | E (7.25) | | 175 | | 60 | 25 | 120-797, 195-799, 290-813, 380-819, 455-835 | > 20 | |
| 2 | E (14.49) | | 290 | | 90 | 25 | 122-735, 195-746, 290-759, 380-773, 435-780 | > 20 | |
| 3 | F (7.25) | | 330 | | 120 | 32 | 122-805, 195-881, 290-993, 380-1126, 455-1240 | 9 | |
| 4 | F (14.49) | | 300 | | 115 | 45 | 120-757, 193-800, 288-884, 378-983, 453-1058 | 12 | |
| 5 | G (7.25) | 475 | | 56 | | 14 | 115-840, 195-850, 315-972, 446-1034 | 15 | 98 |
| 6 | G (14.49) | 420 | | 65 | | 15 | 114-852, 195-861, 315-912, 446-1049 | 15 | |

(a) 100 parts of resin mixture (same as in Example 4) were used in preparing each resin - curing agent mixture.

EP 0 342 766 A2

One can see from Table 4 that with these aqueous curing agent mixtures, the amount of curing agent used seems to have little effect on cure rate or pot life within the concentration range tested. The amine-modified copper(II) tetrafluoroborate solution gives a faster cure rate and a shorter pot life than the amine-modified zinc tetrafluoroborate solution. The amine-modified iron(II) tetrafluoroborate solution, however, shows less favorable curing behavior than either the zinc or copper(II) tetrafluoroborate solutions. The iron-(II) tetrafluoroborate cures more sluggishly at elevated temperatures than does the zinc tetrafluoroborate, yet it gives a shorter pot life at room temperature than does the copper tetrafluoroborate.

EXAMPLE 5

Cure of Monomer-Diluted Mixtures of Bisphenol A - Based Epoxy Resin and Epoxy Novolac with a Modified Commercial Copper Tetrafluoroborate Solution

The following two diluted resin mixtures (Resin Mixture B and Resin Mixture C) were prepared and stirred until homogeneous.

| Resin Mixture B | Resin Mixture C |
| --- | --- |
| 650 g EPON Resin 828 | 1200 g EPON Resin DPS-164 |
| 52 g Styrene | 384 g Styrene |
| 52 g TMPTMA | 384 g TMPTMA |
| 2.6 g Lupersol 101 | 4.8 g Lupersol 101 |
| 0.1 g Phenothiazine | 0.8 g Phenothiazine |

A curing agent mixture was prepared as follows. A commercial 45% aqueous solution of copper tetrafluoroborate, a product of Allied Chemical Corporation (220.87 g) was placed in a flask containing a magnetic stirring bar. Ethylenediamine (1.71 g) was added dropwise with vigorous stirring until the solution had acquired a slight permanent turbidity (turbidity is taken as a sign of neutralization of excess acid). Two parts of this solution were taken and blended with one part of NEODOL (NEODOL is a registered trade mark) 91-6, which is a polyethoxylated $C_9$-$C_{11}$ primary aliphatic alcohol, to form the curing agent mixture used.

The above resin mixtures and the above curing agent mixture in the quantities listed in Table 5 were then combined at room temperature in polyethylene beakers and mixed thoroughly with Jiffy mixers. Thin film gel times for the mixtures were determined at 60°C, 95°C, and 120°C. The mixtures were poured into molds for bar and sheet castings as in Example 1. The molds were placed in an oven and cured for one hour at 50°C, one hour at 80°C, one hour at 120°C, and two hours at 150°C. The sheet and bar castings were removed from the molds and tested for mechanical properties. Mechanical properties are listed in Table 5.

Table 5

| Mixture | 1 | 2 | 3 | 4 |
|---|---|---|---|---|
| Resin Mixture B, g | 349.3 | 232.8 | 116.4 | |
| Resin Mixture C, g | | 164.5 | 328.9 | 411.2 |
| Curing Agent Mixture, g | 12 | 12 | 12 | 10 |
| Gel Time, sec.: 60°C | 475 | 450 | 825 | 1100 |
| 95°C | 70 | 57 | 60 | 80 |
| 120°C | 17 | 12 | 20 | 27 |
| HDT, 264 psi, °C | 95 | 118 | 128 | 148 |
| Room Temperature Tensile: | | | | |
| Strength, MPa | 73 | 75 | 42 | 22 |
| Modulus, MPa | 3064 | 3207 | 3540 | 3457 |
| Elongation, % | 4.2 | 4.4 | 1.4 | 0.67 |

One can see, by comparison of Table 5 with Table 2, that the modified aqueous copper tetrafluoroborate solution gives HDT values which are not as high as those obtained from similar resin mixtures with the PEG 400 solution of hydrated copper tetrafluoroborate. For example, the system containing straight EPON Resin DPS-164 diluted with a mixture of 50% styrene and 50% TMPTMA had HDT's of 164°C. and 179°C. in Table 2 (mixture 7) but only 148°C. in Table 5 (mixture 4).

## EXAMPLE 6

### Use, as Epoxy Curing Agents, of Aqueous Copper(II) Tetrafluoroborate Solutions Modified with High Molecular Weight Poly(Ethylene Glycol)

A 45% aqueous solution of copper(II) tetrafluoroborate (220.87 g) was placed in a flask with a magnetic stirrer. Ethylenediamine (1.71 g) was added dropwise with vigorous stirring until a slight permanent turbidity was noted. This solution was then used to make three curing agent solutions as follows. Curing Agent H contained 2 parts of the amine-modified copper(II) tetrafluoroborate solution and 1 part of NEODOL 91-6. Curing Agent I contained 2 parts of the amine-modified copper(II) tetrafluoroborate solution and 1 part of Union Carbide Polyethylene Glycol Compound 20M. Curing Agent J contained 1 part of the amine-modified copper(II) tetrafluoroborate solution and 1 part of Union Carbide Polyethylene Glycol Compound 20M.

The following resin mixture was prepared and used in the remainder of this example.

| | |
|---|---|
| EPON Resin 828 | 100 pbw |
| Styrene | 8 pbw |
| Trimethylolpropane Trimethacrylate (TMPTMA) | 8 pbw |
| Lupersol 101 | 0.4 pbw |
| Phenothiazine | 0.02 pbw |

Blends of the above resin mixture with the above curing agent mixtures were prepared at room temperature in polyethylene beakers and mixed with Jiffy mixers until a very fine dispersion of the liquid curing agent in the resin mixture was obtained. The mixtures were then deaerated by centrifugation. Gel time of the mixtures in thin films was then determined on gel plates set at various temperatures.

A portion of each mixture was poured into a Ubbelohde viscometer which was then placed in a water bath held at 25°C. Viscosity was measured periodically and "pot life" was calculated as the time required for initial viscosity to double. Additional portions of the mixtures were placed into molds for sheet and bar castings as in Example 1. The molds were placed in an oven and held for the cure cycles indicated below. Gel time, pot life and casting properties are listed in Table 6.

EP 0 342 766 A2

## TABLE 6

### USE OF NEUTRALIZED SOLUTIONS OF COPPER(II) TETRAFLUOROBORATE MODIFIED WITH HIGH MOLECULAR WEIGHT POLY(ETHYLENE GLYCOL) AS CURING AGENTS FOR MONOMER-DILUTED LIQUID EPOXY RESIN (a)

| Run # 128- | Curing Agent (parts) | 60°C Gel Time, sec. | 90°C Gel Time, sec. | 120°C Gel Time, sec. | Elapsed Time (minutes) - Ubbelohde Viscosity (mPa.s) | 25°C Pot Life, hr. | HDT, 264 psi, °C | R.T. Tensile Strength, MPa | R.T. Tensile Modulus, MPa | R.T. Tensile Elongation, % |
|---|---|---|---|---|---|---|---|---|---|---|
| 1 | H (3.44) | 630 | 45 | 19 | 185-1083, 315-1368, 465-1929 | 5.7 | 92, 94 | 59.4 | 3070 | 2.6 |
| 2 | I (3.44) | 1300 | 88 | 30 | 188-806, 318-892, 468-1054 | 12 | 98, 106 | 54.3 | 2840 | 2.5 |
| 3 | J (4.58) | 1900 | 120 | 35 | 185-920, 315-945, 465-957 | > 20 | 98, 101 | 50.4 | 2940 | 2.2 |
| 4 | H (3.44) | | | | | | 61, 66 | 51.2 | 3624 | 1.6 |

(a) All blends contained 100 parts of the resin mixture shown above.
   Cure cycle:  1 hour at 60°C, 1 hour at 80°C, 1 hour at 120°C, 2 hours at 150°C.
   The castings from blend #4 were postcured for an additional 2 hours at 175°C.

One can see from Table 6 that high molecular weight poly(ethylene glycol), when used as a modifier for aqueous copper(II) tetrafluoroborate solutions in the cure of epoxy resins, yields longer pot life at room temperature but also slower cure at elevated temperature than does NEODOL 91-6. One can also note that the system given a 175°C postcure (blend #4) was considerably lower in HDT, though higher in room temperature tensile modulus, than the same system cured at a maximum temperature of only 150°C (blend #1). This decrease of heat resistance with increasing cure temperature is rare for epoxy systems cured within this temperature range and most likely indicates some type of degradation at the higher cure temperature.

The following resin mixture was prepared:

| Ingredient | Amount |
|---|---|
| EPON Resin 828 | 100 pbw |
| Styrene | 10 pbw |
| Lupersol 101 | 0.4 pbw |
| Phenothiazine | 0.01 pbw |

## Claims

1. A curable composition, comprising:
   (1) from 98 to 24 pbw of polyepoxide,
   (2) from 1 to 75 pbw of an unsaturated aromatic monomer,
   (3) from 1 to 75 pbw of a polyacrylate or polymethacrylate ester of a polyol,
   (4) from 0.01 to 10 pbw of a tetrafluoroborate of Cu, Zn, Fe, Ni, Sn, Sb or Al per 100 pbw of the polyepoxide, and
   (5) a curing amount of a free-radical curing agent.

2. The composition of claim 1 wherein the polyepoxide is a glycidyl polyether of a polyhydric phenol.

3. The composition according to claim 1 wherein the polyepoxide is a novolac resin.

4. The composition of any one of claims 1 to 3 wherein the multifunctional monomer is trimethylolpropane trimethacrylate.

5. The composition of any one of claims 1 to 4 wherein the unsaturated aromatic monomer is styrene.

6. The composition of any one of claims 1 to 5 wherein the metal tetrafluoroborate is copper tetrafluoroborate.